# EUROPÄISCHE PATENTSCHRIFT

(11) **EP 3 421 941 B1**
(45) Veröffentlichungstag und Bekanntmachung des Hinweises auf die Patenterteilung: **14.04.2021**
(21) Anmeldenummer: 17178979.5
(22) Anmeldetag: 30.06.2017
(51) Int. Cl.: G01D 4/00

(54) **ANORDNUNG AUS INTELLIGENTEM VERBRAUCHSZÄHLER UND GATEWAY-VORRICHTUNG**
ASSEMBLY OF SMART SUPPLY METER AND GATEWAY DEVICE
SYSTÈME DE COMPTEUR DE CONSOMMATION INTELLIGENT ET DISPOSITIF DE PASSERELLE

(43) Veröffentlichungstag der Anmeldung: 02.01.2019
(73) Patentinhaber: E.ON SE, 45131 Essen (DE)
(72) Erfinder: ROTERING, Niklas, 40629 Düsseldorf (DE); ABS, Paul-Vincent, 81545 München (DE); KRUSE, Kai, 80469 München (DE); ULBRICH, Philip, 45131 Essen (DE)

(56) Entgegenhaltungen:
- DE-A1-102007 059 032
- US-A1- 2006 066 455
- US-A1- 2009 243 869
- US-A1- 2013 297 259
- Serverscheck: "Product Catalogue October 2016", , 31. Oktober 2016 (2016-10-31), XP055429514, Gefunden im Internet: URL:http://documents.serverscheck.com/mark eting/Catalogue_ServersCheck.pdf [gefunden am 2017-11-28]

## Beschreibung

Die Erfindung betrifft eine Anordnung aus einem intelligenten Verbrauchszähler und einer Gateway-Vorrichtung

Ähnliche Anordnungen sind aus den Druckschriften US 2009/243869 A1, US 2006/066455 A1, DE 10 2007 059032 A1 und US 2013/297259 A1 bekannt.

Im Stand der Technik sind sog. Smart-Meter-Gateways bekannt. An diesen Gateways können über eine erste Schnittstelle elektronische Zähler, wie z.B. intelligente Stromzähler, angebunden werden, sodass von diesen ermittelte Verbrauchswerte an das Smart-Meter-Gateway übertragen werden können. Über eine zweite Schnittstelle können die ermittelten Verbrauchswerte über ein Wide-Area-Netzwerk (WAN) an einen zentralen Server übermittelt und aus dem WAN Steuerungs- oder sonstige Informationen, wie bspw. dem momentanen Strompreis, erhalten werden. Eine Anbindung an das WAN ist bspw. über Mobilfunknetze möglich. Eine sog. Home-Area-Netz-Schnittstelle (HAN-Schnittstelle) ermöglicht die Kommunikation des Smart-Meter-Gateways mit intelligenter Haustechnik, sodass bspw. für energieintensive, aber nicht zeitkritische Vorgänge eine Zeit mit günstigen Strompreisen abgewartet werden kann. Auch kann über das HAN der aktuelle und ggf. gespeicherte historische Verbrauchswerte von einem Nutzer, bspw. über einen Computer oder ein Smartphone, abgefragt werden. Sofern das HAN über eine Verbindung mit dem Internet verfügt, kann die Anbindung des Smart-Meter-Gateways an das WAN auch über das HAN erfolgen, sodass am Smart-Meter-Gateway selbst nur eine gemeinsame Hardware-Schnittstelle zur Verbindung mit dem WAN und dem HAN notwendig ist.

Auch um die sichere Stromversorgung des Smart-Meter-Gateways zu gewährleisten, wird das Smart-Meter-Gateway regelmäßig im Stromverteilkasten in unmittelbare Nähe zum Stromzähler, häufig ohne Zwischenschaltung von Schaltern oder Sicherungen, angeordnet. Aufgrund der unmittelbaren Nähe ist zur Übermittlung von Messwerten häufig eine galvanische Verbindung (z. B. per Kabel) zwischen Smart-Meter-Gateway und Stromzähler vorgesehen. Weitere intelligente Verbrauchszähler, bspw. für Wasser oder Gas, können drahtlos mit dem Smart-Meter-Gateway verbunden sein.

Da der Stromverteilkasten eines Hauses regelmäßig im Kellergeschoss angeordnet ist, sodass eine drahtlose Anbindung des Smart-Meter-Gateways an das HAN im Wohnbereich des Hauses, um eine Verbindung mit darin eingebundenen gesonderten Geräten intelligenter Haustechnik zu erreichten, häufig problematisch ist, weisen Smart-Meter-Gateways regelmäßig Ethernet-Schnittstellen auf, um mit über ein Kabel mit dem HAN und/oder dem WAN verbunden zu werden. Dies erfordert jedoch die Verlegung eines Datenkabels vom Stromverteilkasten zu einem Ort, an dem die Einbindung an das HAN und/oder das WAN möglich ist. Insbesondere bei der Nachrüstung eines Hauses mit einem intelligenten Stromzähler erfordert dieses Datenkabel häufig einen erhöhten Aufwand. Auch ist das Smart-Meter-Gateway regelmäßig als gesonderte Einheit herzustellen und zu montieren.

Aufgabe der Erfindung ist es, eine Anordnung aus einem intelligenten Verbrauchszähler und einer Gateway-Vorrichtung zu schaffen, bei der die Nachteile aus dem Stand der Technik nicht mehr oder zumindest nur noch in vermindertem Maße auftreten.

Gelöst wird diese Aufgabe durch eine Anordnung gemäß dem Hauptanspruch. Vorteilhafte Weiterbildungen sind Gegenstand der abhängigen Ansprüche.

Demnach betrifft die Erfindung eine Anordnung umfassend wenigstens einen ersten intelligenten Verbrauchszähler und eine erste Gateway-Vorrichtung, wobei der Verbrauchszähler die von ihm erhobenen Messdaten drahtlos an die Gateway-Vorrichtung übermittelt und die Gateway-Vorrichtung über eine Schnittstelle zur Verbindung mit dem Internet zur Weiterleitung der Messdaten an einen zentralen Server verfügt, wobei Verbrauchszähler und Gateway-Vorrichtung voneinander beabstandet angeordnet sind, die Verbindung zwischen Verbrauchszähler und Gateway-Vorrichtung in einem Frequenzbereich kleiner 1 GHz erfolgt und die Gateway-Vorrichtung wenigstens einen Sensor zur Erfassung wenigstens einer Eigenschaft der unmittelbaren Umgebung der Gateway-Vorrichtung umfasst, und wobei die Gateway-Vorrichtung dazu ausgebildet ist, über wenigstens ein Stellglied der Gateway-Vorrichtung und/oder über wenigstens eine mit der Gateway-Vorrichtung verbundene intelligente Haustechnik in Abhängigkeit von in der Gateway-Vorrichtung hinterlegbaren Vorgaben und den erfassten Eigenschaften auf die unmittelbare Umgebung einzuwirken.

Die Erfindung hat erkannt, dass die Datenmenge, die zwischen dem intelligenten Verbrauchszähler und der Gateway-Vorrichtung ausgetauscht werden muss, derart gering ist, dass hierfür eine drahtlose Verbindung mit vergleichsweise geringer Datenübertragungsrate ausreichend ist, weshalb für eine drahtlose Verbindung zwischen intelligentem Verbrauchszähler und der Gateway-Vorrichtung - bei durch internationale Übereinkommen festgelegten üblichen Bandbreiten - ein Frequenzbereich mit Frequenzen unter 1 GHz gewählt werden kann. Diese niedrigen Frequenzen bieten den Vorteil einer für die erfindungsgemäße Anordnung ausreichenden Reichweite und guten Durchdringung von Hauswänden und Geschossdecken. In der Folge kann die Gateway-Vorrichtung getrennt von den intelligenten Verbrauchszählern angeordnet werden. Bei der üblichen Anordnung von Verbrauchszählern im Keller eines Hauses kann die Gateway-Vorrichtung insbesondere im Wohnbereich des Hauses angeordnet werden. Durch die Möglichkeit der Anordnung der Gateway-Vorrichtung im Wohnbereich eines Hauses - und somit regelmäßig beabstandet von dem intelligenten Verbrauchszähler - befindet sich die Gateway-Vorrichtung unmittelbar in dem Bereich, in dem üblicherweise das HAN liegt, sodass eine Einbindung der Gateway-Vorrichtung in das HAN unproblematisch und einfach möglich ist.

Über das HAN ist häufig auch eine Anbindung an das Internet gegeben. Doch selbst, wenn dies nicht der Fall sein sollte, ist eine Verbindung mit dem Internet aus dem Wohnbereich eines Hauses bspw. über ein Mobilfunknetz regelmäßig möglich.

Darüber hinaus ist vorgesehen, dass die grundsätzlich zur Anordnung im Wohnbereich eines Hauses geeignete Gateway-Vorrichtung einen Sensor zur Erfassung wenigstens einer Eigenschaft der unmittelbaren Umgebung der Gateway-Vorrichtung und dazu ausgebildet ist, über wenigstens ein Stellglied und/oder mit der Gateway-Vorrichtung verbundene intelligente Haustechnik in Abhängigkeit von in der Gateway-Vorrichtung hinterlegbaren Vorgaben und den erfassten Eigenschaften auf die unmittelbare Umgebung einzuwirken. In anderen Worten soll die Gateway-Vorrichtung zusätzlich zur Smart-Meter-Gateway-Funktion noch die Funktion eines Gerätes intelligenter Haustechnik, eines sog. Smart-Home-Devices, erfüllen. Handelt es sich bei dem Sensor bspw. um einen Temperatursensor, kann die Gateway-Vorrichtung die Funktion eines intelligenten Thermostats erfüllen, indem die erfasste Temperatur mit in der Gateway-Vorrichtung hinterlegten Vorgaben - wie bspw. wochentags- und tageszeitabhängiger Solltemperatur oder von einem Nutzer über das HAN und/oder das Internet kurzfristig übermittelte Solltemperatur - eine zur Erreichung der vorgegebenen Solltemperatur geeignete Ansteuerung eines Stellgliedes zur Folge hat. Das Stellglied - im vorliegenden Beispiel bspw. ein Aktuator für ein Heizungsventil - kann entweder unmittelbar der Gateway-Vorrichtung zugeordnet sein oder aber getrennt von dieser als eigenständiges Gerät intelligenter Haustechnik ausgebildet sein, welches über das HAN entsprechend angesteuert wird.

Durch die aufgrund der erfindungsgemäßen grundsätzlichen Anordnenbarkeit der Gateway-Vorrichtung beabstandet von dem intelligenten Verbrauchszähler insbesondere im Wohnbereich eines Hauses ist es möglich, die Funktionen eines Smart-Home-Gateways mit einem Gerät intelligenter Haustechnik zusammenzufassen und so die Anzahl der erforderlichen Geräte zu reduzieren. Dadurch entstehen Vorteile sowohl bei der Herstellung als auch bei der Montage.

Erfindungsgemäß sind ein zweiter intelligenter Verbrauchszähler und eine zweite Gateway-Vorrichtung vorgesehen, wobei die erste Gateway-Vorrichtung als Repeater für die drahtlose Verbindung zwischen zweitem intelligentem Verbrauchszähler und zweiter Gateway-Vorrichtung ausgebildet ist. Die zweite Gateway-Vorrichtung und der zweite intelligente Verbrauchszähler sind dabei analog zu der ersten Gateway-Vorrichtung bzw. dem ersten intelligenten Verbrauchszähler ausgestaltet, sodass insbesondere die Kommunikation zwischen diesen Geräten drahtlos mit einer Frequenz von kleiner 1 GHz erfolgt. Eine Anordnung mit mehreren Gateway-Vorrichtungen und intelligenten Verbrauchszählern ist insbesondere bei Mehrfamilienhäusern vorzufinden, wo die intelligenten Verbrauchszähler regelmäßig im Keller angeordnet sind, während die erfindungsgemäße Gateway-Vorrichtung aufgrund ihrer Smart-Home-Funktion in den jeweiligen Wohnungen angeordnet sein werden. Trotz der guten Durchdringung der Drahtlosverbindung zwischen intelligenten Verbrauchszählern und Gateway-Vorrichtung ist bei Mehrfamilienhäusern jedoch nicht ausgeschlossen, dass eine direkte Drahtlosverbindung zwischen einer zweiten bspw. in einem oberen Geschoss des Hauses angeordneten Gateway-Vorrichtung und einem zweiten intelligenten Verbrauchszähler nicht möglich ist. Für diesen Fall ist daher vorgesehen, dass eine erste Gateway-Vorrichtung als Repeater für die Verbindung zwischen zweiter Gateway-Vorrichtung und zweitem intelligenten Verbrauchszähler dient, also das von dem zweiten intelligenten Verbrauchszähler empfangenen Signal unverändert erneut aussendet, sodass dieses wiederholte Signal von der zweiten Gateway-Vorrichtung empfangen und verarbeitet werden kann.

Die Gateway-Vorrichtung weist vorzugsweise einen Stromanschluss zur Versorgung mit elektrischer Energie auf. Da die Gateway-Vorrichtung regelmäßig nur über eine Haus- bzw. Wohnungssicherung mit Strom versorgt wird, sodass es bei Auslösen der Sicherung zu einer Unterbrechung der Stromzufuhr kommen kann, ist bevorzugt, wenn die Gateway-Vorrichtung vorzugsweise eine Ersatzstromversorgung umfasst. Mit Hilfe dieser Ersatzstromversorgung kann insbesondere die drahtlose Verbindung mit dem Stromzähler aufrechterhalten werden, sodass der Datenfluss zwischen der Gateway-Vorrichtung und dem intelligenten Stromzähler nicht unterbrochen wird. Die Ersatzstromversorgung kann vorzugsweise eine Batterie oder einen wiederaufladbaren Akku umfassen.

Die Verbindung zwischen Verbrauchszähler und Gateway-Vorrichtung besteht vorzugsweise im 860-MHz-Band. Das 860-MHz-Band bzw. die Subbänder darin sind international für sogenannte Jedermann-Funkanwendungen freigegeben, sodass die Kommunikation in diesem Band ohne Bedarfsnachweis, jedoch unter Einhaltung der jeweiligen technischen Bestimmungen erlaubt ist. Die Subbänder des 860-MHz-Band haben eine für die erfindungsgemäße Anordnung ausreichende Datenübertragungsrate, sowie eine ausreichend gute Durchdringung von Hauswänden und Geschossdecken. Die Verbindung mit der intelligenten Haustechnik erfolgt vorzugsweise über die Schnittstelle zur Verbindung mit dem Internet. Sowohl für die Verbindung mit dem WAN als auch dem HAN wird also vorzugsweise die gleiche Schnittstelle verwendet. Dabei ist unerheblich, ob die Schnittstelle parallel eine Verbindung sowohl mit dem WAN als auch dem HAN aufbaut, oder die Verbindung mit dem WAN über das HAN besteht. Es ist besonders bevorzugt, wenn die fragliche Schnittstelle eine IEEE-802.11-Schnittstelle ist, also die Einbindung der Gateway-Vorrichtung in ein WLAN ermöglicht.

Bei dem wenigstens einen Sensor der Gateway-Vorrichtung kann es sich um einen Temperatursensor, ein Mikrofon, einen Abwesenheitssensor, einen Bewegungsmelder, einen Helligkeitssensor und/oder eine Kamera handeln. Selbstverständlich ist auch eine beliebige Kombination dieser Sensoren möglich. Aus dem wenigstens einen vorgesehenen Sensor der Gateway-Vorrichtung ergibt sich letztendlich auch die mögliche Funktion der Gateway-Vorrichtung als Gerät der intelligenten Haustechnik. Mit einem Temperatursensor kann die Gateway-Funktion bspw. als intelligentes Thermostat fungieren.

Sofern vorhanden, ist das wenigstens eine Stellglied der Gateway-Vorrichtung vorzugsweise ein Aktuator für ein Heizungsventil, ein elektrischer Schalter und/oder ein elektrischer Leistungssteller. Durch entsprechende Stellglieder können mit der Gateway-Vorrichtung unmittelbar verbundene Geräte angesteuert werden, um die Eigenschaften der unmittelbaren Umgebung der Gateway-Vorrichtung zu beeinflussen. Beispielsweise kann es sich die Gateway-Vorrichtung in Form eines Heizungsthermostats ausgestaltet sein, welches unmittelbar an einem Heizkörper befestigt ist und über das Stellglied das Heizungsventil ansteuert.

Die Gateway-Vorrichtung kann ein Anzeigeelement, einen Schallwandler und/oder ein Eingabeelement aufweisen. Über entsprechende Elemente können Informationen, wie bspw. die aktuelle und die Solltemperatur, und/oder Warnhinweise ausgegeben werden. Über ein Eingabeelement lassen sich bspw. in der Gateway-Vorrichtung hinterlegte Vorgaben verändern. Es ist besonders bevorzugt, wenn die Gateway-Vorrichtung für eine Sprachsteuerung ausgebildet ist.

Bei dem intelligenten Verbrauchszähler kann es sich um einen intelligenten Stromzähler, einen intelligenten Gaszähler, einen intelligenten Wasserzähler und/oder einen intelligenten Wärmezähler handeln.

### Die Figuren zeigen:

Figur 1: ein Beispiel einer nicht zur Erfindung gehörenden Ausführungsform; und
Figur 2: die erfindungsgemäße Anordnung.

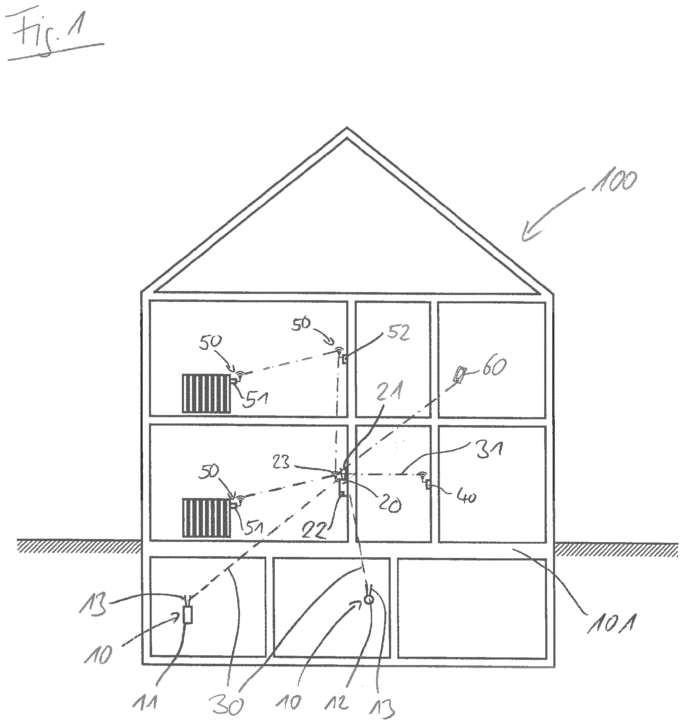

In Figur 1 ist ein Beispiel einer nicht zur Erfindung gehörenden Ausführungsform gezeigt. Die Anordnung 1 ist dabei in einem Einfamilienhaus 100 installiert, welches schematisch dargestellt ist.

Die Anordnung 1 umfasst zunächst zwei erste intelligente Verbrauchszähler 10, nämlich einen intelligenten Stromzähler 11 und einen intelligenten Wasserzähler 12, die jeweils dazu ausgebildet sind, die von ihnen erfassten Verbrauchswerte drahtlos zu übertragen. Dazu weisen die intelligenten Verbrauchszähler 10 entsprechende Sende- und Empfangsantennen 13 auf. Des Weiteren ist eine Gateway-Vorrichtung 20 vorgesehen, die zum Empfang der von den intelligenten Verbrauchszählern 10 ermittelten Verbrauchswerte sowie zum Senden von Steuerungssignalen an die intelligenten Verbrauchszähler 10 ausgebildet ist und eine dazu geeignete Sende- und Empfangsantenne 11 aufweist.

Die durch die gestrichelten Linien 30 dargestellten Verbindungen zwischen den Sende- und Empfangsantennen 11 der intelligenten Verbrauchszähler 10 und der Gateway-Vorrichtung 20 erfolgen im 860-MHz-Band, genauer im 869,4-869,65-MHz-Subband. Die Datenübertragungsrate ist für die Anordnung 1 ausreichend, wobei das gewählte Band eine derart gute Durchdringung bietet, dass die Kommunikation von im Keller des Hauses 100 angeordneten intelligenten Verbrauchszählern 10 zu der davon beabstandet im Erdgeschoss angeordneten Gateway-Vorrichtung 20 selbst durch die Kellerdecke 101, durch die Signale mit einer Frequenz von bspw. 2,4 GHz oder 5 GHz nicht durchdringen, problemlos möglich ist.

Die Gateway-Vorrichtung 20 umfasst weiterhin eine IEEE-802.11-konforme Schnittstelle 23, über die die Gateway-Vorrichtung 20 in ein im Wohnbereich des Hauses 100 aufgebautes WLAN-Netz eingebunden ist. Teil des WLAN-Netzes ist der Router 40, über den eine Verbindung zum Internet besteht. Über den Router 40 besitzt also auch die Gateway-Vorrichtung eine Verbindung mit dem Internet zur Weiterleitung der von den intelligenten Verbrauchszählern 10 erfassten Verbrauchsdaten an einen zentralen Server (nicht dargestellt). Die diversen - auch nachfolgend beschriebenen - Verbindungen über das WLAN-Netz sind durch die Strichpunkt-Linien 31 angedeutet.

Die Gateway-Vorrichtung 20 weist außerdem noch einen Sensor 22, nämlich einen Temperatursensor, auf, mit dem die Temperatur in der unmittelbaren Umgebung der Gateway-Vorrichtung 20 erfasst wird. Die Gateway-Vorrichtung 20 ist dazu ausgebildet, über die Schnittstelle 22 mit einem Aktuator 51 an dem Heizungsventil einer im selben Raum angeordneten Heizung als Gerät intelligenter Haustechnik 50 zu kommunizieren, um die Temperatur in Abhängigkeit von in der Gateway-Vorrichtung 20 hinterlegten Vorgaben zu regeln, wobei die hinterlegten Vorgaben von dem Nutzer über ein mit dem WLAN-Netz oder dem Internet verbundenes mobiles Endgerät 60, wie bspw. ein Smartphone, verändert werden können. Die Gateway-Vorrichtung 20 erfüllt somit die Aufgabe eines Smart-Home-Thermostats, wie es aus dem Stand der Technik als gesonderte Einheit bekannt ist. Auch die Kommunikation zwischen der Gateway-Vorrichtung mit anderen Geräten der intelligenten Haustechnik 50, wie bspw. einem Smart-Home-Thermostat 52, welches wiederrum den Aktuator 51 an dem Heizungsventil einer im selben Raum angeordneten Heizung ansteuert, ist gemäß der bekannten Verbindung von Smart-Home-Geräten ausgestaltet und ermöglicht bspw. die zentrale Temperatursteuerung in dem mit entsprechenden Geräten der intelligenten Haustechnik 50 ausgestatteten Räumen des Hauses 100.

Die Gateway-Vorrichtung 20 wird grundsätzlich über die im Haus verlegte Elektrik mit elektrischer Energie versorgt, weist aber für einen evtl. Stromausfall eine Ersatzstromversorgung in Form einer in der Gateway-Vorrichtung 20 angeordneten Batterie (nicht dargestellt) auf, sodass selbst im Falle eines Stromausfalls zumindest die drahtlose Verbindung zwischen Gateway-Vorrichtung 20 und den intelligenten Verbrauchszählern 10 aufrechterhalten werden kann.

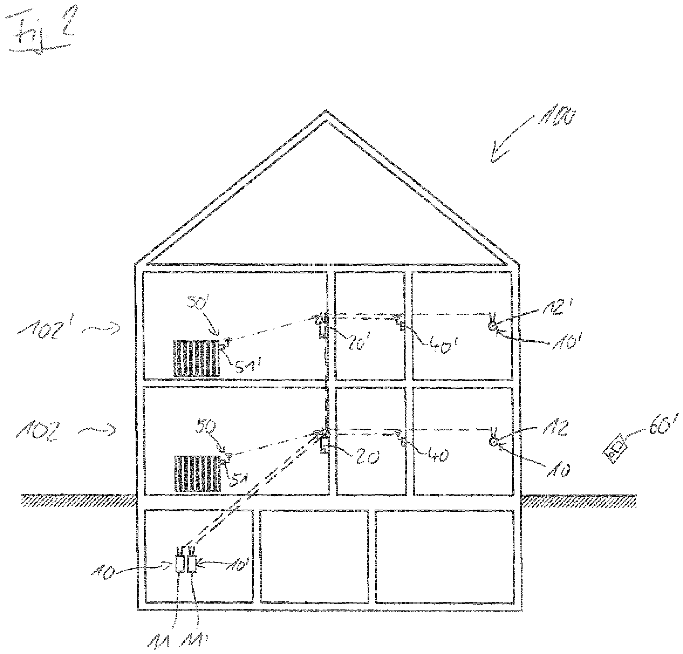

In Figur 2 ist die erfindungsgemäße Anordnung 1 skizziert. Bei dem dort dargestellten Haus 100 handelt es sich um ein Mehrfamilienhaus mit zwei übereinander gelegenen Wohneinheiten 102, 102'. Die nachfolgenden Komponenten der Anordnung 1 entsprechen im Wesentlichen denjenigen der Anordnung 1 aus Figur 1, weshalb auf die obigen Erläuterungen Bezug genommen wird.

Für jede der Wohneinheiten 102, 102' ist im Keller des Hauses 100 ein intelligenter Stromzähler 11, 11' vorgesehen, wobei der Stromzähler 11 für die untere Wohneinheit 102 als erster intelligenter Verbrauchszähler 10, der Stromzähler 11' für die obere Wohneinheit 102' als zweiter intelligenter Verbrauchszähler 10' bezeichnet wird. Die intelligenten Wasserzähler 12, 12' sind als weiter erste und zweite intelligenter Verbrauchszähler 10, 10' unmittelbar in den jeweiligen Wohneinheiten 102, 102' angeordnet. Auch verfügt jede Wohneinheit 102, 102' über eine eigene Gateway-Vorrichtung 20, 20' sowie einen eigenen WLAN-Router 40, 40'. Auch verfügt jede Wohneinheit 102, 102' über einen Aktuator 51, 51' an dem Heizungsventil einer Heizung als Gerät intelligenter Haustechnik 50, wobei die Heizung jeweils in demselben Raum wie die Gateway-Vorrichtung 20, 20' angeordnet ist.

Die einer Wohneinheit 102, 102' zugeordneten Komponenten der Anordnung sind drahtlos im 860-MHz-Band (gestrichelte Linien 30) oder über WLAN (Strichpunktlinien 31) miteinander verbunden und können gemäß den Ausführungen betreffend Figur 1 miteinander kommunizieren.

Allerdings ist die Entfernung zwischen dem zweiten Stromzähler 11' und der zweiten Gateway-Vorrichtung 20' zu groß, um sie unmittelbar zu überbrücken. Um dennoch eine Verbindung zwischen diesem zweiten intelligenten Verbrauchszähler 10' und der zweiten Gateway-Vorrichtung 20' herstellen zu können, ist die erste Gateway-Vorrichtung 20 als Repeater ausgebildet. Dabei empfängt die erste Gateway-Vorrichtung 20 das von dem zweiten intelligenten Verbrauchszähler 10' gesendete Signal, welches grundsätzlich für die Gateway-Vorrichtung 20' gedacht ist, von dieser aber nicht unmittelbar empfangen werden kann, und sendet dieses Signal unverändert erneut aus. Dieses wiederholte Signal kann von der zweite Gateway-Vorrichtung 20' empfangen werden, womit eine Verbindung zwischen der dem zweiten Stromzähler 11' und der zweiten Gateway-Vorrichtung 20' besteht. Selbstverständlich dient die erste Gateway-Vorrichtung 20 auch als Repeater für einen möglichen Datenfluss von der zweiten Gateway-Vorrichtung 20' zum zweiten Stromzähler 11'.

Die zweite Gateway-Vorrichtung 20' erhält im dargestellten Ausführungsbeispiel geänderte Vorgaben für die Temperatursteuerung von dem mobilen Endgerät 60', welches nicht unmittelbar mit dem WLAN-Netz der zweiten Wohneinheit 102' verbunden ist. Vielmehr gelangen die geänderten Vorgaben über das Internet und den Router 40' zu der zweiten Gateway-Vorrichtung 20'.

## Patentansprüche

1. Anordnung (1) umfassend wenigstens einen ersten intelligenten Verbrauchszähler (10) und eine erste Gateway-Vorrichtung (20), wobei der erste intelligente Verbrauchszähler (10) die von ihm erhobenen Messdaten drahtlos an die erste Gateway-Vorrichtung (20) übermittelt und die erste Gateway-Vorrichtung (20) über eine Schnittstelle (23) zur Verbindung mit dem Internet zur Weiterleitung der Messdaten an einen zentralen Server verfügt, wobei erster intelligenter Verbrauchszähler (10) und erste Gateway-Vorrichtung (20) voneinander beabstandet angeordnet sind, die Verbindung zwischen ersten intelligenten Verbrauchszähler (10) und erster Gateway-Vorrichtung (20) in einem Frequenzbereich kleiner 1 GHz erfolgt und die erste Gateway-Vorrichtung (20) wenigstens einen Sensor (22) zur Erfassung wenigstens einer Eigenschaft der unmittelbaren Umgebung der ersten Gateway-Vorrichtung (20) umfasst, und wobei die erste Gateway-Vorrichtung (20) dazu ausgebildet ist, über wenigstens ein Stellglied der ersten Gateway-Vorrichtung (20) und/oder über wenigstens eine mit der ersten Gateway-Vorrichtung (20) verbundene intelligente Haustechnik (50) in Abhängigkeit von in der ersten Gateway-Vorrichtung (20) hinterlegbaren Vorgaben und den erfassten Eigenschaften auf die unmittelbare Umgebung einzuwirken, **dadurch gekennzeichnet, dass** ein zweiter intelligenter Verbrauchszähler (10') und eine zweite Gateway-Vorrichtung (20') vorgesehen sind, wobei die zweite Gateway-Vorrichtung (20') und der zweite intelligente Verbrauchszähler (10') analog zu der ersten Gateway-Vorrichtung (20) bzw. dem ersten intelligenten Verbrauchszähler (10) ausgestaltet sind,
wobei die erste Gateway-Vorrichtung (20) als Repeater für die drahtlose Verbindung zwischen zweitem intelligenten Verbrauchszähler (10') und zweiter Gateway-Vorrichtung (20') ausgebildet ist.

2. Anordnung nach einem der vorhergehenden Ansprüche,
**dadurch gekennzeichnet, dass** die erste Gateway-Vorrichtung (20) einen Stromanschluss zur Versorgung mit elektrischer Energie aufweist, wobei die erste Gateway-Vorrichtung (20) vorzugsweise eine Ersatzstromversorgung umfasst.

3. Anordnung nach einem der vorhergehenden Ansprüche,
**dadurch gekennzeichnet, dass** die drahtlose Verbindung zwischen ersten intelligenten Verbrauchszähler (10) unc erster Gateway-Vorrichtung (20) im 860-MHz-Band besteht.

4. Anordnung nach einem der vorhergehenden Ansprüche,
**dadurch gekennzeichnet, dass**
die Verbindung mit der intelligenten Haustechnik (50) über die Schnittstelle (23) zur Verbindung mit dem Internet erfolgt, wobei diese Schnittstelle vorzugsweise eine drahtlose Schnittstelle, weiter vorzugsweise eine IEEE-802.11-konforme Schnittstelle ist.

5. Anordnung nach einem der vorhergehenden Ansprüche,
**dadurch gekennzeichnet, dass**
der wenigstens eine Sensor (22) der ersten Gateway-Vorrichtung (20) ein Temperatursensor, ein Mikrofon, ein Abwesenheitssensor, ein Bewegungsmelder, einen Helligkeitssensor und/oder eine Kamera umfasst.

6. Anordnung nach einem der vorhergehenden Ansprüche,
**dadurch gekennzeichnet, dass**
das wenigstens eine Stellglied der ersten Gateway-Vorrichtung (20)
ein Aktuator für ein Heizungsventil, ein elektrischer Schalter und/oder ein elektrischer Leistungssteller ist.

7. Anordnung nach einem der vorhergehenden Ansprüche,
**dadurch gekennzeichnet, dass**
die erste Gateway-Vorrichtung (20) ein Anzeigeelement, einen Schallwandler und/oder ein Eingabeelement aufweist und/oder zur Sprachsteuerung ausgebildet ist.

8. Anordnung nach einem der vorhergehenden Ansprüche,
**dadurch gekennzeichnet, dass**
der erste und/oder zweite intelligente Verbrauchszähler (10, 10') ein intelligenter Stromzähler (11, 11'), ein intelligenter Gaszähler, ein intelligenter Wasserzähler (12, 12') und/oder ein intelligenter Wärmezähler ist.

## Claims

1. An assembly (1) comprising at least one first smart supply meter (10) and a first gateway device (20), wherein the first smart supply meter (10) transmits the measurement data it collects wirelessly to the first gateway device (20) and the first gateway device (20) has an interface (23) for connection to the internet for transferring the measurement data to a central server, wherein the first smart supply meter (10) and the first gateway device (20) are arranged at a distance from one another, the connection between the first smart supply meter (10) and the first gateway device (20) occurs in a frequency range of less than 1 GHz, and the first gateway device (20) comprises at least one sensor (22) for detecting at least one property of the immediate vicinity of the first gateway device (20), and wherein the first gateway device (20) is designed to act on the immediate vicinity via at least one actuator of the first gateway device (20) and/or via at least one smart home technology (50) connected to the first gateway device (20) as a function of specifications that can be stored in the first gateway device (20) and the detected properties,
**characterised in that**
a second smart supply meter (10') and a second gateway device (20') are provided, wherein the second gateway device (20') and the second smart supply meter (10') are designed analogously to the first gateway device (20) and first smart supply meter (10) respectively, wherein the first gateway device (20) is designed as a repeater for the wireless connection between the second smart supply meter (10') and the second gateway device (20').

2. The assembly according to one of the preceding claims,
**characterised in that**
the first gateway device (20) has a power connection for supplying electrical energy, wherein the first gateway device (20) preferably comprises a standby power supply.

3. The assembly according to one of the preceding claims,
**characterised in that**
the wireless connection between the first smart supply meter (10) and the first gateway device (20) is in the 860 MHz band.

4. The assembly according to one of the preceding claims,
**characterised in that**
the connection to the smart home technology (50) occurs via the interface (23) for connection to the internet, wherein this interface is preferably a wireless interface, more preferably an IEEE 802.11-compliant interface.

5. The assembly according to one of the preceding claims,
**characterised in that**
the at least one sensor (22) of the first gateway device (20) comprises a temperature sensor, a microphone, an occupancy sensor, a motion detector, a brightness sensor and/or a camera.

6. The assembly according to one of the preceding claims,
**characterised in that**
the at least one actuator of the first gateway device (20) is an actuator for a heating valve, an electrical switch and/or an electrical power controller.

7. The assembly according to one of the preceding claims,
**characterised in that**
the first gateway device (20) has a display element, a sound transducer and/or an input element and/or is designed for voice control.

8. The assembly according to one of the preceding claims,
**characterised in that**
the first and/or second smart supply meter (10, 10') is a smart electricity meter (11, 11'), a smart gas meter, a smart water meter (12, 12') and/or a smart heat meter.

## Revendications

1. Système (1) comprenant au moins un premier compteur de consommation intelligent (10) et un premier dispositif de passerelle (20), le premier compteur de consommation intelligent (10) transmettant sans fil les données de mesure qu'il collecte au premier dispositif de passerelle (20) et le premier dispositif de passerelle (20) ayant une interface (23) pour la connexion à Internet servant à transmettre les données de mesure à un serveur central, le premier compteur de consommation intelligent (10) et le premier dispositif de passerelle (20) étant disposés à l'écart l'un de l'autre, la connexion entre le premier compteur de consommation intelligent (10) et le premier dispositif passerelle (20) s'effectuant dans une gamme de fréquences inférieure à 1 GHz et le premier dispositif passerelle (20) possédant au moins un capteur (22) pour détecter au moins une propriété de l'environnement immédiat du premier dispositif de passerelle (20), et le premier dispositif de passerelle (20) est conçu pour agir sur son environnement immédiat par l'intermédiaire d'au moins un actionneur du premier dispositif de passerelle (20) et/ou par l'intermédiaire d'au moins une technologie de maison intelligente (50) connectée au premier dispositif de passerelle (20) en fonction de spécifications pouvant être définies dans le premier dispositif de passerelle (20) et des propriétés détectées,
**caractérisé en ce qu'**
un second compteur de consommation intelligent (10') et un second dispositif de passerelle (20') sont en place, le second dispositif de passerelle (20') et le second compteur de consommation intelligent (10') étant analogues au premier dispositif de passerelle (20) ou au premier compteur de consommation intelligent (10), le premier dispositif de passerelle (20) étant conçu sous la forme d'un répéteur pour la connexion sans fil entre le second compteur de consommation intelligent (10') et le second dispositif de passerelle (20').

2. Système selon l'une quelconque des revendications précédentes,
**caractérisé en ce que**
le premier dispositif de passerelle (20) présente une connexion électrique pour l'alimentation électrique, le premier dispositif de passerelle (20) comprenant de préférence une source électrique de rechange.

3. Système selon l'une quelconque des revendications précédentes,
**caractérisé en ce que**
la connexion sans fil entre le premier compteur de consommation intelligent (10) et le premier dispositif de passerelle (20) existe dans la bande de 860 MHz.

4. Système selon l'une quelconque des revendications précédentes,
**caractérisé en ce que**
la connexion à la technologie de maison intelligente (50) est réalisée par l'intermédiaire de l'interface (23) de connexion à Internet, cette interface étant de préférence une interface sans fil, plus préférablement une interface conforme à IEEE 802.11.

5. Système selon l'une quelconque des revendications précédentes,
**caractérisé en ce que**
l'au moins un capteur (22) du premier dispositif de passerelle (20) comprend un capteur de température, un microphone, un capteur d'absence, un détecteur de mouvement, un capteur de luminosité et/ou une caméra.

6. Système selon l'une quelconque des revendications précédentes,
**caractérisé en ce que**
l'au moins un actionneur du premier dispositif de passerelle (20) est un actionneur pour une vanne de chauffage, un interrupteur électrique et/ou un contrôleur de puissance électrique.

7. Système selon l'une quelconque des revendications précédentes,
**caractérisé en ce que**
le premier dispositif de passerelle (20) présente un élément d'affichage, un transducteur de son et/ou un élément d'entrée et/ou est conçu pour une commande vocale.

8. Système selon l'une quelconque des revendications précédentes,
**caractérisé en ce que**
le premier et/ou second compteur de consommation intelligent (10, 10') est un compteur électrique intelligent (11, 11'), un compteur de gaz intelligent, un compteur d'eau intelligent (12, 12') et/ou un compteur de chaleur intelligent.
